Europäisches Patentamt

European Patent Office

Office européen des brevets

(11) Numéro de publication : **0 284 458 B1**

# (12) FASCICULE DE BREVET EUROPEEN

(45) Date de publication du fascicule du brevet :
09.10.91 Bulletin 91/41

(51) Int. Cl.⁵ : **G11B 23/023**

(21) Numéro de dépôt : **88400406.0**

(22) Date de dépôt : **23.02.88**

(54) Boîte d'emballage.

(30) Priorité : 24.02.87 FR 8702810

(43) Date de publication de la demande :
28.09.88 Bulletin 88/39

(45) Mention de la délivrance du brevet :
09.10.91 Bulletin 91/41

(84) Etats contractants désignés :
AT BE CH DE ES FR IT LI LU NL

(56) Documents cités :
DE-A- 3 324 126
US-A- 4 641 750

(73) Titulaire : ALLARDI
Rue Féburon
F-50600 St HILAIRE DU HARCOUET (FR)

(72) Inventeur : Baron, Michel
La Haute Froidrière
F-50730 Saint Martin de Landelles (FR)

(74) Mandataire : Boivin, Claude
9, rue Edouard-Charton
F-78000 Versailles (FR)

## Description

La présente invention concerne un emballage du type comportant deux demi-coques emboîtables l'une dans l'autre, réalisées dans une feuille en matière plastique et collées sur une même feuille extérieure en carton ou autre matière semi-rigide. Lorsqu'on ferme la boîte, la feuille extérieure en carton est mise sous tension alors que la feuille intérieure en matière plastique est mise en compression ; il tend à se produire un glissement relatif des deux feuilles qui est empêché par leur collage. Cette absence de glissement nuit à l'aspect de la boîte fermée. Un emballage de ce genre est décrit dans le document AU-B-539485.

La présente invention a pour objet une boîte d'emballage perfectionnée de manière à remédier à cet inconvénient.

La boîte selon l'invention est caractérisée en ce que la feuille extérieure en carton présente deux refoulages situés sensiblement en regard des bords internes des demi-coques et en ce que ces refoulages ne sont pas collés à la feuille en matière plastique.

La réserve d'encollage peut n'être prévue qu'au droit des refoulages. Elle peut également exister dans l'intervalle défini par ces refoulages.

On a décrit ci-après, à titre d'exemple non limitatif, un mode de réalisation de la boîte selon l'invention, avec référence au dessin annexé dans lequel :

La Figure 1 est une vue en plan de la boîte ouverte mise à plat ;

La Figure 2 en est une coupe suivant II-II de la Figure 1 ;

La Figure 3 est une vue en coupe transversale de la boîte fermée ;

La Figure 4 est une vue en perspective de la boîte fermée.

Telle qu'elle est représentée au dessin, la boîte selon l'invention est constituée par une feuille intérieure 1 en matière plastique, par exemple en polystyrène, qui est collée sur une feuille extérieure 2 en carton.

La feuille 1 est thermoformée de manière à constituer deux demi-coques 3a et 3b. La demi-coque 3a comporte une nervure annulaire interne 4a à laquelle correspond une nervure annulaire interne 4b, de forme complémentaire, de la demi-coque 3b. A l'intérieur de ces deux nervures, les demi-coques comportent deux nervures de même forme et de mêmes dimensions 5a et 5b dont la hauteur est inférieure à celle des nervures 4a et 4b.

La feuille en carton 2 comporte deux refoulages prononcés 6 approximativement au droit des côtés internes des nervures 4a et 4b. Ces refoulages ne sont pas collés à la feuille 1 en matière plastique, comme indiqué en 7. Cette absence de collage s'obtient facilement en prévoyant une réserve dans les zones de refoulage lors de l'encollage de la feuille de carton 2 avec un adhésif permanent thermofusible.

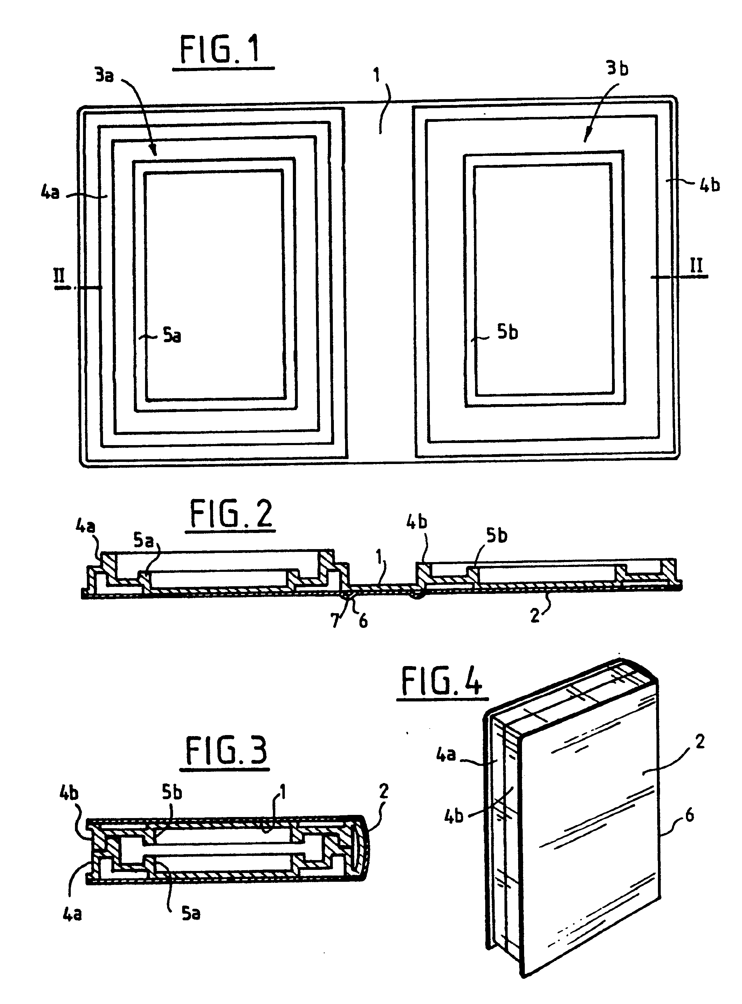

Lorsqu'on ferme la boîte, les deux demi-coques 3a et 3b viennent s'encliqueter l'une dans l'autre, la nervure 4a de la demi-coque 3a venant s'engager dans la nervure 4b de la demi-coque 3b (voir Figure 3). Les deux nervures 5a et 5b viennent se placer en regard l'une de l'autre en formant un cadre de maintien pour l'objet placé dans la boîte.

Lors de la fermeture de la boîte, la feuille intérieure 1 subit une compression alors que la feuille extérieure 2 subit une extension ; cette dernière est permise par les refoulages 6. Le glissement relatif des deux feuilles 1 et 2 est lui-même rendu possible par l'absence de collage au droit des refoulages 6. La boîte fermée a l'aspect d'un livre relié à dos bombé comme on le voit à la Figure 4.

Il va de soi que la présente invention en couvre, au contraire, toutes les variantes, c'est ainsi, en particulier, que la feuille 2 pourrait ne pas être collée à la feuille 1 entre les deux refoulages 6.

## Revendications

1. Emballage comportant deux demi-coques (3a et 3b) emboîtables l'une dans l'autre, réalisées dans une même feuille en matière plastique (1) et collées sur une même feuille extérieure (2) en carton ou autre matière semi-rigide, caractérisé en ce que la feuille extérieure (2) en carton présente deux refoulages (6) situés sensiblement en regard des bords internes des demi-coques et en ce que ces refoulages ne sont pas collés à la feuille en matière plastique (1).

## Patentansprüche

1. Verpackung, bestehend aus zwei ineinander einfügbaren Halbschalen (3a und 3b), die aus ein und derselben Plastikfolie (1) hergestellt und auf ein und demselben außen befindlichen Blatt (2) aus Karton oder anderem halbstarren Material aufgeklebt sind, **dadurch gekennzeichnet**, daß das außen befindliche Blatt (2) aus Karton zwei Stauchungsbereiche (6) aufweist, die genau gegenüber den Innenkanten der Halbschalen angeordnet sind, und dadurch, daß diese Stauchungsbereiche nicht an der Plastikfolie (1) angeklebt sind.

## Claims

1. Packing comprising two half-shells (3a and 3b) with one being able to be nested in the other and made of a given plastic sheet (1) and glued onto a given external cardboard sheet (2) or onto any other semi-rigid material, wherein the external cardboard sheet (2) has two fold-backs (6) situated approximately opposite the internal edges of the half-shells and wherein these fold-backs are not glued to the plastic sheet (1).

# FIG.1

# FIG.2

# FIG.4

# FIG.3